# FASCICULE DE BREVET EUROPEEN

(11) **EP 1 053 936 B1**
(45) Date de publication et mention de la délivrance du brevet: **28.07.2004**
(21) Numéro de dépôt: 00401310.8
(22) Date de dépôt: 15.05.2000
(51) Int. Cl.: B64D 27/26

(54) **Dispositif d'accrochage d'un moteur d'aeronef**
Triebwerksaufhängung für Luftfahrzeuge
Mounting arrangement for an aircraft engine

(30) Priorité: 17.05.1999 FR 9906215
(43) Date de publication de la demande: 22.11.2000
(73) Titulaire: AIRBUS France, 31060 Toulouse (FR)
(72) Inventeur: Jule, Pascal, 31170 Tournefeuille (FR); Porte, Alain, 31770 Colomiers (FR); Levert, Stéphane, 31200 Toulouse (FR)
(74) Mandataire: Poulin, Gérard

(56) Documents cités:
- WO-A-93/11041

## Description

### Domaine technique

L'invention concerne un dispositif d'accrochage destiné au montage d'un moteur d'aéronef sur un mât fixé à un élément de structure de l'aéronef, tel qu'un élément de voilure ou de fuselage.

Le dispositif d'accrochage conforme à l'invention peut être utilisé sur tout type d'avion. Une application privilégiée concerne les avions de construction récente, dont les moteurs sont équipés de soufflantes de très grands diamètres.

### Etat de la technique

Les moteurs qui équipent les aéronefs sont soit suspendus à un mât fixé sous la voilure de l'aéronef, soit accrochés latéralement à un mât fixé sur le fuselage de l'aéronef. Dans l'un et l'autre cas, la liaison entre le moteur et le mât est généralement assurée par un dispositif d'accrochage avant et un dispositif d'accrochage arrière. Ces dispositifs d'accrochage ont pour fonction de transmettre à l'aéronef, par l'intermédiaire du mât, les efforts engendrés par le moteur.

Pour analyser les efforts transmis par les dispositifs d'accrochage, on affecte au moteur un repère orthonormé OXYZ, dans lequel l'axe OX, dirigé vers l'avant, est orienté selon l'axe longitudinal du moteur, l'axe OY est orienté latéralement dans un plan horizontal et l'axe OZ est orienté verticalement vers le haut.

Par rapport à ce repère, dans le cas d'un moteur suspendu à la voilure, les efforts transmis à la structure de l'aéronef par les dispositifs d'accrochage sont principalement des efforts de poussée du moteur, appliqués sensiblement selon l'axe OX, des efforts latéraux dus notamment à une rafale de vent, appliqués sensiblement selon l'axe OY, et des efforts dus à la masse du moteur ou générés en cas de crash de l'avion, appliqués sensiblement selon l'axe OZ. De plus, les dispositifs d'accrochage transmettent à la structure de l'aéronef un moment selon l'axe OX, dû au mouvement rotatif du moteur. Dans le cas d'un moteur monté latéralement sur le fuselage, les efforts appliqués selon les axes OY et OZ sont inversés.

Pour assurer la fixation d'un turboréacteur sur un mât d'accrochage d'aéronef, il existe actuellement deux types principaux de montage : le montage de type "core" et le montage de type "fan hybride".

Dans le montage de type "core", le carter central du turboréacteur est directement fixé au mât d'accrochage par une attache avant et une attache arrière. Dans ce cas, l'attache avant reprend simultanément les efforts selon les axes OX, OY et OZ et l'attache arrière reprend les efforts selon les axes OY et OZ ainsi que le moment selon l'axe OX.

Dans le montage de type "fan hybride", une attache avant est interposée entre le mât et le carter de soufflante du turboréacteur et une attache arrière est interposée entre le mât et le carter central du turboréacteur, comme dans le montage de type "core". Dans ce cas, l'attache avant reprend les efforts selon les axes OY et OZ et l'attache arrière reprend les efforts selon les axes OX, OY et OZ ainsi que le moment selon l'axe OX. De plus et comme l'illustre notamment le document EP-A- 0 564 126, la reprise de la poussée selon l'axe OX s'effectue au moyen de deux bielles reliant l'attache arrière à la partie avant du carter central du moteur.

Ainsi, dans l'ensemble des systèmes de fixation des moteurs d'aéronefs utilisés habituellement, tous les dispositifs d'accrochage autres que les bielles de reprise de poussée assurent la transmission des efforts selon au moins deux directions différentes.

Par ailleurs, les bielles de reprise de poussée sont dimensionnées pour reprendre un effort important, orienté selon l'axe longitudinal OX du moteur. Il s'agit donc de bielles de grande longueur (environ 2 m).

En outre et comme l'illustre notamment le document US-A-5 275 357, les dispositifs d'accrochage utilisés dans les systèmes de montage existants comportent le plus souvent une structure d'accrochage de secours. Cette structure d'accrochage de secours, liée directement au mât ou à une ferrure intermédiaire, est une pièce spécifique sollicitée uniquement dans le cas d'une rupture d'un ou plusieurs des éléments de la structure d'accrochage principale. Actuellement, toutes les pièces des structures d'accrochage de secours sont passives en fonctionnement normal. Elles n'interviennent pas lorsque la structure d'accrochage principale est opérationnelle. Elles ne deviennent actives que lors de la rupture d'une ou de plusieurs pièces de la structure d'accrochage principale. Leur absence n'altérerait donc pas la transmission des efforts au travers de la structure d'accrochage principale du dispositif d'accrochage.

Un dispositif d'accrochage qui montre toutes les caractéristiques du préambule de la revendication indépendante est connu de WO-A-93/11041 et qui est consideré comme l'art antérieur le plus proche.

L'utilisation récente de moteurs de dimensions et de masse de plus en plus importantes accentue des problèmes tels que la mise en flexion du moteur, les vibrations, etc.. Afin de s'affranchir de ces problèmes en assurant une meilleure répartition des masses, on envisage de remplacer les systèmes de montage traditionnels par un nouveau système, utilisant trois dispositifs d'accrochage au lieu de deux. Dans ce cas, le mât serait relié au carter de soufflante par un dispositif d'accrochage avant ne reprenant que les efforts appliqués dans une seule et unique direction, correspondant sensiblement à l'axe vertical OZ lorsque le moteur est placé sous la voilure de l'aéronef.

Pour réaliser ce dispositif d'accrochage, il n'est pas possible d'utiliser la structure à deux bielles servant à reprendre les efforts de poussée dans le montage de type "fan hybride". En effet, la direction de l'effort à transmettre est située dans un plan vertical et non plus longitudinal. De plus, le dispositif d'accrochage doit être le plus étroit possible afin que la perturbation engendrée dans l'écoulement aérodynamique de l'air soit aussi faible que possible. En outre, l'emplacement réduit dont on dispose entre le mât et le carter de soufflante du moteur impose d'utiliser un dispositif d'accrochage compact.

Par ailleurs, le dispositif d'accrochage appelé à remplir cette fonction doit, de préférence, être facilement démontable, afin d'éviter toute perte de temps lors de la dépose ou de la pose du moteur.

Enfin, il n'est pas non plus possible de reprendre l'un des dispositifs d'accrochage utilisés dans les systèmes de montage traditionnels, tels que l'attache avant du montage de type "fan hybride", qui reprend les efforts exercés selon les axes OY et OZ. En effet, du fait que ces dispositifs d'accrochage existants reprennent toujours des efforts exercés selon au moins une direction autre que l'axe OZ, leur utilisation impose de rigidifier plus fortement le mât afin d'assurer une reprise correcte des efforts transmis par le dispositif d'accrochage. Cela implique de rajouter de la matière et donc d'alourdir le mât, ce qui est pénalisant. De plus, cela irait à l'encontre d'une amélioration des performances du moteur, recherchée par l'utilisation d'un nouveau système de montage incluant un dispositif d'accrochage avant ne reprenant que les efforts appliqués principalement selon l'axe vertical OZ.

### Exposé de l'invention

L'invention a principalement pour objet un dispositif d'accrochage simplifié, susceptible d'être utilisé dans un nouveau système de montage d'un moteur d'aéronef sur un mât d'accrochage, afin d'assurer la transmission des efforts selon une seule et unique direction, dans un emplacement réduit et en perturbant le moins possible l'écoulement aérodynamique de l'air.

Secondairement, l'invention a aussi pour objet un dispositif d'accrochage apte à être facilement démonté, si nécessaire.

Conformément à l'invention, ce résultat est obtenu au moyen d'un dispositif d'accrochage d'un moteur d'aéronef sur un mât fixé à un élément de structure de l'aéronef, ledit dispositif comprenant une structure d'accrochage principale et une structure d'accrochage de secours, dans lequel la structure d'accrochage principale assure la transmission d'efforts orientés vers le mât, selon une direction, sensiblement radiale par rapport à un axe longitudinal du moteur, la structure d'accrochage de secours comprenant un élément fixé au mât, qui fait aussi partie de la structure d'accrochage principale, caractérisé en ce que la structure d'accrochage principale assure la transmission d'efforts orientés vers le mât selon une seule et unique direction, sensiblement radiale, l'élément commun à la structure d'accrochage principale et à la structure d'accrochage de secours comprenant avantageusement au moins deux pièces distinctes, aptes à transmettre indépendamment l'une de l'autre les efforts orientés selon ladite direction. Ainsi, en cas de rupture de l'une des deux pièces, la transmission des efforts continue à être assurée au travers de l'autre pièce.

Dans un mode de réalisation préféré de l'invention, la structure d'accrochage principale comprend, de plus, un palonnier articulé sensiblement en son centre sur l'élément commun à la structure d'accrochage principale et à la structure d'accrochage de secours, et deux bielles articulées à chacune des extrémités du palonnier, de façon à relier celui-ci à un carter du moteur.

Dans cet agencement, le palonnier est de préférence articulé sur l'élément commun à la structure d'accrochage principale et à la structure d'accrochage de secours par un axe d'articulation orienté sensiblement parallèlement à l'axe longitudinal du moteur.

Par ailleurs, les bielles sont avantageusement articulées sur le palonnier et sur le carter du moteur par des axes rotulés. Cet agencement permet d'éviter que des efforts parasites, c'est-à-dire orientés selon une direction différente de la direction de transmission d'efforts précitée, ne transitent par le dispositif d'accrochage.

Pour compléter la structure d'accrochage de secours, l'élément commun à cette structure et à la structure d'accrochage principale est avantageusement relié au carter par une liaison avec jeu, non travaillante lorsque la structure d'accrochage principale est opérationnelle.

Avantageusement, la liaison avec jeu comprend un autre axe d'articulation, monté sur l'élément par l'intermédiaire d'une rotule, et un trou formé dans une chape solidaire du carter et traversé avec jeu par ledit autre axe d'articulation.

Dans le cas où le moteur est un turboréacteur, le dispositif d'accrochage selon l'invention est utilisé avantageusement pour relier le mât au carter de soufflante de ce turboréacteur.

De préférence, l'élément commun à la structure d'accrochage principal et à la structure d'accrochage de secours comprend un plan de déconnexion, prévu pour être fixé au mât par des moyens de fixation.

### Brève description des dessins

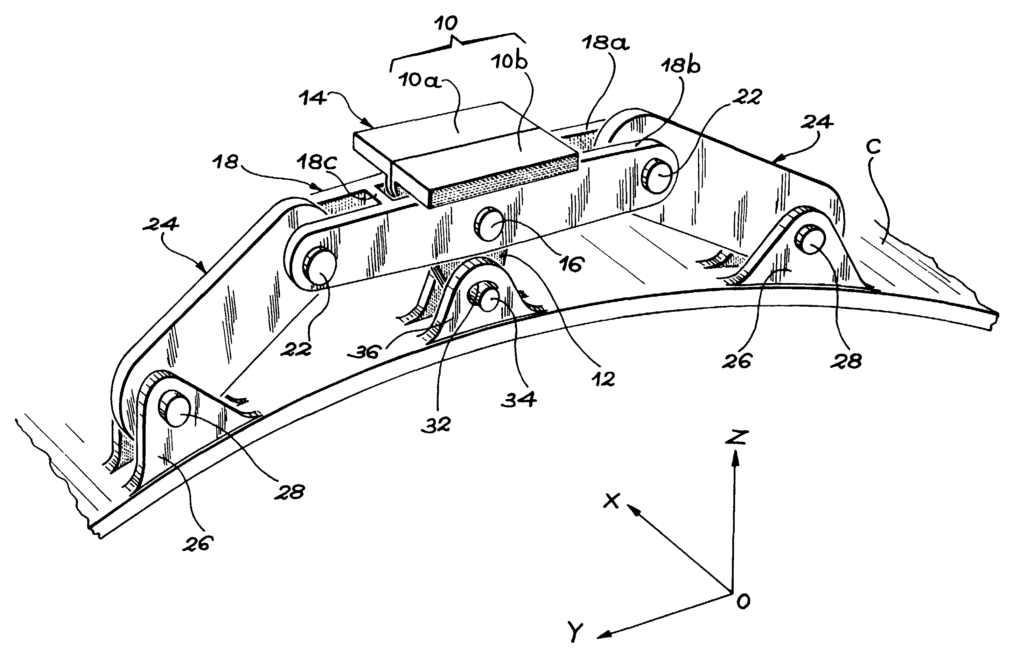

On décrira à présent, à titre d'exemple non limitatif, un mode de réalisation préféré de l'invention, en se référant aux dessins annexés, dans lesquels la figure unique est une vue en perspective qui représente un dispositif d'accrochage conforme à l'invention.

### Exposé détaillé d'un mode de réalisation préféré de l'invention

Sur la figure unique, on a représenté un dispositif d'accrochage conforme à l'invention, appliqué au cas d'un moteur monté sous la voilure d'un aéronef. Dans une variante de réalisation non représentée, un dispositif d'accrochage identique, mais orienté différemment, peut être utilisé pour monter un moteur latéralement contre le fuselage d'un aéronef.

Le dispositif d'accrochage représenté sur la figure permet de relier un carter C du moteur dont on désire réaliser l'accrochage à un mât (non représenté) fixé sous la voilure de l'aéronef. Plus précisément, dans le cas le plus fréquent où le moteur de l'aéronef est un turboréacteur, le dispositif d'accrochage selon l'invention est avantageusement interposé entre le mât et le carter de soufflante C de ce turboréacteur.

Conformément à une caractéristique essentielle de l'invention, le dispositif d'accrochage illustré sur la figure est un dispositif particulièrement simple et compact, dimensionné et optimisé de façon à ne transmettre au mât que les efforts exercés par le moteur selon une seule et unique direction, orientée vers le mât, sensiblement radialement par rapport à un axe longitudinal du moteur.

Ainsi, le dispositif d'accrochage conforme à l'invention assure seulement la transmission au mât des efforts de poussée, dirigés sensiblement selon l'axe vertical OZ, dans un repère orthonormé OXYZ dans lequel l'axe OX est orienté vers l'avant selon l'axe longitudinal du moteur, l'axe OY est orienté latéralement et situé dans un plan horizontal et l'axe OZ est orienté verticalement vers le haut. Dans le cas (non représenté) où le dispositif d'accrochage est appliqué au montage d'un moteur sur le fuselage d'un aéronef, les seuls efforts transmis par ce dispositif sont orientés sensiblement selon l'axe latéral OY.

Comme les dispositifs d'accrochage utilisés dans les systèmes de montage traditionnels de type "core" et de type "fan hybride", le dispositif d'accrochage selon l'invention comprend une structure d'accrochage principale, qui assure normalement la transmission intégrale des efforts lorsqu'elle est opérationnelle, et une structure d'accrochage de secours, au travers de laquelle transite une partie des efforts à transmettre, après la cassure de l'une des pièces de la structure d'accrochage principale.

Dans le dispositif d'accrochage selon l'invention, la structure d'accrochage principale et la structure d'accrochage de secours comprennent un élément commun, désigné de façon générale par la référence 10 sur la figure.

Compte tenu de sa fonction vitale dans le dispositif d'accrochage, l'élément 10 est formé de deux pièces distinctes 10a et 10b, au travers desquelles transitent tous les efforts transmis entre le moteur et le mât, dans les conditions normales comme dans les conditions de secours. Plus précisément, chacune des pièces 10a et 10b formant l'élément 10 est apte à transférer, à elle seule, l'ensemble de ces efforts.

Chacune des pièces 10a et 10b présente en section, dans le plan vertical XOZ, la forme d'un L. Les deux pièces 10a et 10b sont accolées dos à dos de telle sorte que l'élément 10 ainsi formé présente en section dans le plan XOZ la forme d'un T. Les pièces 10a et 10b sont assemblées l'une à l'autre, par exemple au moyen de boulons (non représentés).

Ainsi, l'élément 10 comprend une chape verticale mâle 12, formée pour moitié dans chacune des pièces 10a et 10b, ainsi qu'une semelle horizontale 14, également formée pour moitié dans chacune des deux pièces constituant l'élément 10.

La face supérieure plane de la semelle 14 de l'élément 10 forme un plan de déconnexion, prévu pour être fixé sous le mât d'accrochage suspendu à la voilure, par tout moyen de fixation approprié tel que des écrous à barillet, ou autres. Pour faciliter la lecture de la figure, ces moyens de fixation n'ont pas été représentés.

La chape mâle 12 fait saillie vers le bas à partir de la semelle 14, dans un plan perpendiculaire à l'axe longitudinal OX du moteur. A proximité de la semelle 14, la chape 12 est traversée par un premier trou (non représenté), dans lequel est monté un axe d'articulation 16. Cet axe d'articulation 16 est orienté sensiblement parallèlement à l'axe longitudinal OX du moteur. Il fait partie intégrante de la structure d'accrochage principale du dispositif, dont les autres éléments constitutifs vont à présent être décrits.

La structure d'accrochage principale du dispositif d'accrochage selon l'invention comprend également un palonnier 18, qui est articulé sensiblement en son centre sur l'élément 10, par l'intermédiaire de l'axe d'articulation 16. Plus précisément, le palonnier 18 s'étend selon une direction sensiblement parallèle à l'axe latéral OY, de part et d'autre de l'axe 16 et il est monté sur cet axe de façon à pouvoir pivoter librement par rapport à l'élément 10.

De façon plus détaillée, on voit sur la figure que le palonnier 18 est une pièce monobloc, qui comporte deux branches parallèles 18a, 18b situées de part et d'autre de la chape mâle 12. Ces deux branches 18a, 18b sont reliées l'une à l'autre, de chaque côté de la chape mâle 12, par des membrures 18c, dont une seule est visible sur la figure. Au-delà de ces membrures 18c, les branches 18a, 18b du palonnier 18 forment des chapes femelles dans lesquelles sont reçus des axes de pivotement 22 orientés parallèlement à l'axe de pivotement 16.

Comme l'illustre également la figure, la structure d'accrochage principale comprend de plus deux bielles 24, reliant chacune des extrémités du palonnier 18 au carter C du moteur. Ces bielles 24 sont situées dans le plan médian du palonnier 18, perpendiculaire à l'axe longitudinal OX du moteur. Plus précisément, une extrémité de chacune des bielles 24 est articulée dans la chape femelle formée par l'extrémité adjacente du palonnier 18, par l'intermédiaire de l'axe 22 et d'une rotule (non représentée).

L'autre extrémité de chacune des bielles 24 est articulée dans une chape femelle 26 prévue à cet effet sur le carter C du moteur. Cette articulation est assurée par un axe de pivotement 28 ainsi que par une rotule (non représentée) interposée entre l'axe 28 et l'extrémité de la bielle 24 correspondante.

Par ailleurs, la structure d'accrochage de secours est principalement constituée par l'élément 10 déjà décrit. Afin d'assurer une liaison mécanique directe entre cet élément 10 et le carter C du moteur, en cas de défaillance de l'une des pièces constituant la structure d'accrochage principale, un deuxième trou traverse la chape mâle 12, à proximité de son extrémité inférieure. Un axe de pivotement 34 est monté dans ce deuxième trou par l'intermédiaire d'une rotule (non représentée). L'axe de pivotement 34 traverse avec jeu un trou 32 formé dans une chape femelle 36 faisant partie intégrante du carter C du moteur. Comme les axes de pivotement 16, 22 et 28, l'axe de pivotement 34 est orienté sensiblement parallèlement à l'axe longitudinal OX du moteur.

Le jeu formé entre le trou 32 et l'axe de pivotement 34 est dimensionné afin que la chape femelle 36 ne soit jamais en contact avec l'axe de pivotement 34 porté par la chape mâle 12, lorsque la structure d'accrochage principale est opérationnelle. Afin d'absorber les mouvements relatifs du moteur, dus notamment à la dilatation, le trou 32 peut éventuellement présenter une forme oblongue dans le sens circonférentiel.

Lorsque toutes les pièces du dispositif d'accrochage qui vient d'être décrit sont en état de marche et lorsque l'avion est au sol, l'ensemble formé par le palonnier 18 et par les bielles 24 s'équilibre naturellement, du fait que le palonnier pivote librement autour de l'axe 16. Les efforts exercés par le moteur selon l'axe OZ transitent par les bielles 24, le palonnier 18, l'axe 16, puis l'élément 10, jusqu'au mât (non représenté). L'élément 10, qui appartient à la structure d'accrochage de secours, est donc actif en permanence, c'est-à-dire en l'absence de rupture d'une pièce d'accrochage principale.

Lorsque l'avion est en vol, le dispositif est soumis à des efforts de poussée selon l'axe OX, à des efforts latéraux selon l'axe OY et à des efforts dus au poids du moteur selon l'axe OZ.

Les efforts de poussée sont repris majoritairement par un ou plusieurs autres dispositifs d'accrochage (non représentés) par lesquels le moteur est également relié au mât. Du fait que les bielles 24 sont montées sur le palonnier 18 et sur le carter C par des axes 22 et 28 rotulés, si une faible partie des efforts de poussée selon l'axe OX n'est pas reprise par un autre dispositif d'accrochage du système de montage, elle ne peut en aucun cas être transmise par le dispositif d'accrochage selon l'invention.

Lorsque le réacteur est soumis à une rafale de vent selon l'axe OY, il se met automatiquement dans une nouvelle position d'équilibre, grâce à la capacité de pivotement du palonnier 18 autour de l'axe 16. Cette caractéristique est rendue possible par le fait que le palonnier 18 est monté pivotant sur la chape 12.

En cas de rupture de l'une des pièces constitutives du dispositif d'accrochage, la chape 12 devient active en tant que structure d'accrochage de secours.

Ainsi, si l'une des bielles 24 casse, la chape 12 assure automatiquement la fonction d'accrochage et de passage des efforts, en association avec l'autre bielle 24 encore intègre et le palonnier 18. Les efforts sont donc correctement retransmis au mât.

Par ailleurs, en cas de rupture de l'une des chapes formée par les extrémités du palonnier 18, la chape 12 assure la même fonction d'accrochage et de passage des efforts que précédemment, en association avec la partie encore intègre de la structure d'accrochage principale. Il en est de même en cas de rupture de l'un des axes 22 et 28.

La description qui précède montre que le dispositif d'accrochage selon l'invention est un dispositif compact, perturbant au minimum l'écoulement aérodynamique.

De plus, ce dispositif est particulièrement simple, aussi bien dans sa conception que dans sa réalisation. En particulier, toutes les pièces sont visibles et peuvent être inspectées et démontées sans démonter le moteur. En outre, le montage et le démontage par rapport au mât est aisé, grâce aux moyens de fixation (non représentés) interposés entre la semelle 14 de l'élément 10 et le mât.

Enfin, le dispositif est dimensionné et optimisé pour reprendre un seul type d'effort et pour assurer une fonction de secours en cas de défaillance d'une pièce.

Bien entendu, l'invention n'est pas limitée au mode de réalisation qui vient d'être décrit à titre d'exemple. Ainsi, au moins certaines des chapes mâles et femelles reliant les différentes pièces du dispositif, au travers des axes de pivotement, peuvent être inversées sans sortir du cadre de l'invention. Dans ce cas, l'élément 10 peut notamment être formé par l'assemblage de deux pièces à section en forme de U, encastrées l'une dans l'autre.

Par ailleurs, si le dispositif est avantageusement placé entre un mât et un carter de soufflante de turboréacteur, il peut aussi être utilisé pour relier un mât à tout autre carter de moteur d'avion. Enfin, comme on l'a déjà observé, un tel dispositif peut aussi être utilisé dans le cas d'un moteur fixé latéralement au fuselage d'un aéronef.

## Revendications

1. Dispositif d'accrochage d'un moteur d'aéronef sur un mât fixé à un élément de structure de l'aéronef, ledit dispositif comprenant une structure d'accrochage principale et une structure d'accrochage de secours, dans lequel la structure d'accrochage principale (18,24) assure la transmission d'efforts orientés vers le mât, selon une direction (OZ), sensiblement radiale, par rapport à un axe longitudinal (OX) du moteur, la structure d'accrochage de secours comprenant un élément (10) fixé au mât, qui fait aussi partie de la structure d'accrochage principale, **caractérisé en ce que** la structure d'accrochage principale (18,24) assure la transmission d'efforts orientés vers le mât selon une seule et unique direction (OZ), sensiblement radiale par rapport à un axe longitudinal (OX) du moteur, l'élément commun à la structure d'accrochage principale et à la structure d'accrochage de secours comprenant au moins deux pièces distinctes (10a,10b), aptes à transmettre indépendamment l'une de l'autre les efforts orientés selon ladite direction (OZ).

2. Dispositif selon la revendication 1, dans lequel la structure d'accrochage principale comprend, de plus, un palonnier (18) articulé sensiblement en son centre sur ledit élément (10), et deux bielles (24) articulées à chacune des extrémités du palonnier (18), de façon à relier celui-ci à un carter (C) du moteur.

3. Dispositif selon la revendication 2, dans lequel le palonnier (18) est articulé sur ledit élément (10) par un axe d'articulation (16) orienté sensiblement parallèlement à l'axe longitudinal du moteur.

4. Dispositif selon l'une quelconque des revendications 2 et 3, dans lequel les bielles (24) sont articulées sur le palonnier (18) et sur le carter (C) du moteur par des axes rotulés (22,28).

5. Dispositif selon l'une quelconque des revendications 2 à 4, dans lequel ledit élément (10) est relié au carter (C) par une liaison avec jeu (32,34), non travaillante lorsque la structure d'accrochage principale est opérationnelle.

6. Dispositif selon la revendication 5, dans lequel ladite liaison avec jeu comprend un autre axe d'articulation (34), monté sur l'élément (10) par l'intermédiaire d'une rotule, et un trou (32) formé dans une chape (36) solidaire du carter (C) et traversé avec jeu par ledit autre axe d'articulation (34).

7. Dispositif selon l'une quelconque des revendications 2 à 6, dans lequel, le moteur étant un turboréacteur, ledit carter est un carter (C) de soufflante du turboréacteur.

8. Dispositif selon l'une quelconque des revendications précédentes, dans lequel ledit élément (10) comprend un plan de déconnexion, prévu pour être fixé au mât par des moyens de fixation.

## Patentansprüche

1. Vorrichtung zur Aufhängung eines Luftfahrzeugtriebwerks an einem an einem Strukturelement des Luftfahrzeugs befestigten Mast, wobei die Vorrichtung eine Hauptaufhängungsstruktur und eine Hilfsaufhängungsstruktur umfasst, wobei die Hauptaufhängungsstruktur (18,24) die Übertragung von auf den Mast gerichteten Kräften in einer im wesentlichen radialen Richtung (OZ) bezüglich einer Longitudinalachse (OX) des Triebwerks ausführt, und die Hilfsaufhängungsstruktur ein am Mast befestigtes Element (10) umfasst, welches ebenfalls Teil der Hauptaufhängungsstruktur ist, **dadurch gekennzeichnet, dass** die Hauptaufhängungsstruktur (18,24) die Übertragung von auf den Mast gerichteten Kräften nur in einer einzigen Richtung (OZ) ausführt, die im wesentlichen radial in Bezug auf eine Longitudinalachse (OX) des Triebwerks ist, wobei das der Hauptaufhängungsstruktur und der Hilfsaufhängungsstruktur gemeinsame Element mindestens zwei unterschiedliche Teile (10a,10b) aufweist, welche unabhängig voneinander die in der genannten Richtung (OZ) gerichteten Kräfte übertragen können.

2. Vorrichtung nach Anspruch 1, wobei die Hauptaufhängungsstruktur außerdem eine Traverse (18) umfasst, die im wesentlichen in seinem Zentrum an dem Element (10) angelenkt ist, sowie zwei Zwischenglieder (24), die an jedem der Enden der Traverse (18) angelenkt sind, um dieses mit einem Gehäuse (C) des Triebwerks zu verbinden.

3. Vorrichtung nach Anspruch 2, wobei die Traverse (18) an dem Element (10) durch eine Gelenkachse (16) angelenkt ist, welche im wesentlichen parallel zur Longitudinalachse des Triebwerks ausgerichtet ist.

4. Vorrichtung nach einem der Ansprüche 2 oder 3, wobei die Zwischenglieder (24) an der Traverse (18) und am Gehäuse (C) des Triebwerks über Kippzapfenachsen (22,28) angelenkt sind.

5. Vorrichtung nach einem der Ansprüche 2 bis 4, wobei das Element (10) mit dem Gehäuse (C) über eine Verbindung mit Spiel (32,34) verbunden ist, die nicht arbeitet, wenn die Hauptaufhängungsstruktur in Funktion ist.

6. Vorrichtung nach Anspruch 5, wobei die Verbindung mit Spiel eine weitere Gelenkachse (34), die an dem Element (10) über ein Kugelgelenk angebracht ist, und ein Loch (32), das in einem mit dem Gehäuse (C) einstückigen Gabelgelenk (36) ausgebildet ist und mit Spiel von der anderen Gelenkachse (34) durchsetzt wird, umfasst.

7. Vorrichtung nach einem der Ansprüche 2 bis 6, wobei das Triebwerk ein Turboreaktor ist und das Gehäuse ein Gebläsegehäuse (C) des Turboreaktors ist.

8. Vorrichtung nach einem der vorangehenden Ansprüche, wobei das Element (10) eine Verbindungstrennungsebene umfasst, die zur Befestigung am Masten durch Befestigungsmittel vorgesehen ist.

## Claims

1. Device for the attachment of an aircraft engine to a strut fixed to a structural element of the aircraft, said device comprising a main attachment structure and an emergency attachment structure, wherein the main attachment structure (18, 24) ensures the transmission of forces oriented towards the strut in a substantially radial direction (OZ) with respect to a longitudinal axis (OX) of the engine, the emergency attachment structure incorporating an element (10) fixed to the strut, which also forms part of the main attachment structure, **characterized in that** the main attachment structure (18, 24) ensures the transmission of forces oriented towards the strut in a single direction (OZ), which is substantially radial with respect to the longitudinal axis (OX) of the engine, the element common to the main attachment structure and to the emergency attachment structure comprising at least two separate parts (10a, 10b) able to transmit, independently of one another, the forces oriented in said direction (OZ).

2. Device according to claim 1, wherein the main attachment structure also comprises a crossbar (18) articulated substantially in its centre to said element (10), as well as two rods (24) articulated to each of the ends of the crossbar (18), so as to connect the latter to an engine casing (C).

3. Device according to claim 2, wherein the crossbar (18) is articulated to said element (10) by a hinge pin (16) oriented substantially parallel to the longitudinal axis of the engine.

4. Device according to either of the claims 2 and 3, wherein the rods (24) are articulated to the crossbar (18) and to the engine casing (C) by swivel pins (22, 28).

5. Device according to any one of the claims 2 to 4, wherein said element (10) is connected to the casing (C) by a connection with clearance (32, 34), not working when the main attachment structure is operational.

6. Device according to claim 5, wherein said connection with clearance comprises another hinge pin (34), mounted on the element (10) by means of a ball joint, and a hole (32) formed in a cap (36) integral with the casing (C) and traversed with clearance by said other hinge pin (34).

7. Device according to any one of the claims 2 to 6, wherein, with said engine being a turbojet engine, said casing (C) is a fan stator case of the turbojet engine.

8. Device according to any one of the preceding claims, wherein said element (10) comprises a disconnection plane to be fixed to the strut by fixing means.
